# EUROPEAN PATENT APPLICATION

(11) **EP 0 726 416 A1**
(43) Date of publication of application: **14.08.1996**
(21) Application number: 96101583.1
(22) Date of filing: 05.02.1996
(51) Int. Cl.: F16L 11/08

(54) **Hose having knitted reinforcement**

(30) Priority: 10.02.1995 US 386776
(71) Applicant: THE GOODYEAR TIRE & RUBBER COMPANY, Akron, Ohio 44316-0001 (US)
(72) Inventor: Wood, Douglas Bruce, Lincoln, NE 68502 (US)
(74) Representative: Leitz, Paul

(57) **Abstract**

A hose **(10)** having a knitted reinforcement wherein the wales **(12)** are helically oriented at an angle to the hose axis **(11)** of opposite hand to the helical orientation of the courses **(14)**.

## Description

### 1. Field of the Invention

This invention relates to hoses, and in particular, to hoses having knitted reinforcement.

### 2. Background of the Invention

Conventional hoses knitted with the loops, or wales, positioned parallel to the hose axis, and with the yarn between the loops, or courses, forming a helix which is usually well above the neutral angle of a spiral hose. When subjected to internal pressure, conventional knit hose twists and increases in diameter until the angle between the wales and courses yields a balance of S and Z tensile forces.

3. Spiral reinforced hose makes optimum use of the yarn when S and Z helixes are symmetric and near the neutral angle of 54 7°, but this results in torsional stiffness about the hose axis and in a limited ability to bend the hose to a small radius. Since the S and Z reinforcement is symmetric and independent from each other, it is difficult to expand or flare the end of the hose as is required in many automotive applications. Knitted hose permits some movement of yarn between the courses and wales, resulting in lower torsional stiffness and tighter bend radius.

4. Conventionally knit hoses can be found illustrated in **US-A-2 264 213; 2 788 804; 3 201 954; 3 462 976; and 4 679 599**.

### 5. Summary of the Invention

In accordance with the present invention, there is provided a hose having an axis comprising an inner tube layer and at least one layer of knitted reinforcement having wales and courses wherein the reinforcement is knitted such that the wales have a helical orientation opposite to the orientation of the courses. The wales and courses are oriented at angles so as to neutralize the forces acting upon them when the hose is bent or pressurized.

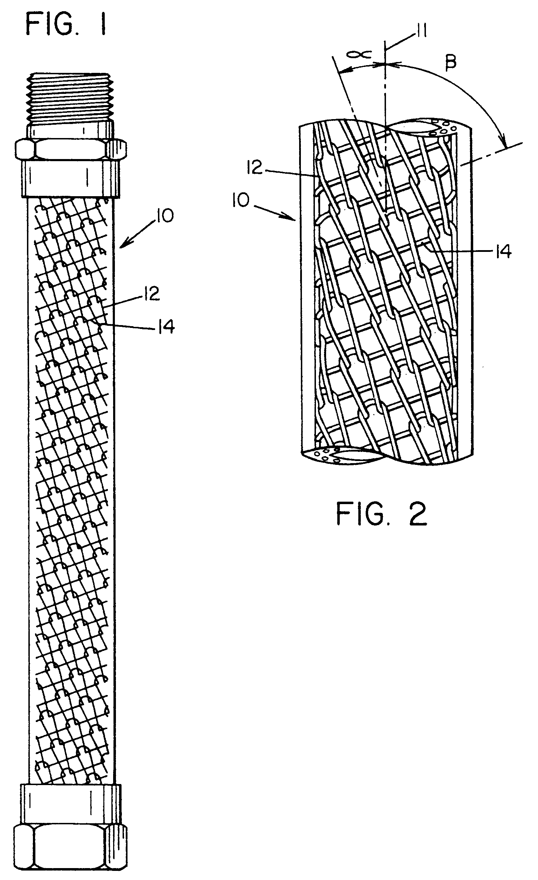

6. **Figure 1** is a view showing a section of a hose containing a tubular knitted fabric made according to the present invention;
7. **Figure 2** is an enlarged view in elevation more clearly illustrating the construction of the reinforcing fabric in the hose;

### 8. Detailed Description of the Preferred Embodiments.

The hose shown generally at 10 has a longitudinal axis 11, a knitted reinforcement made up of a set of wales 12 and a set of courses 14. The wales 12 are knitted such that they form a helix having an angle α from the axis 11 ranging from an angle of 2° to 55°. The connecting links or courses 14 form an angle β from the axis 11 which has an orientation opposite to the orientation of the wales. It is a preferred embodiment that the orientation of the wales and courses be perpendicular to each other.

9. While the pattern of knitting shown in the illustrations is that of a lock stitch pattern, it can be appreciated that other patterns of knitting such as simple knit can be used.

10. The hose of this invention is produced by extruding a polymeric core tube (not illustrated) through an extruder and guiding it to the knitting head of a knitting machine. The helical knit pattern of the instant invention is produced by either twisting the polymeric tube as it proceeds through the knitting head in order to provide the wales 12 with their angularity or employing a knitting machine having the capabilities for the knitting head to rotate such as described in **US-A-5 309 738**.

11. The yarns which are used in the knitted reinforcement can be any of those well known in the art such as polyamide, polyaramide, polyester, cotton, rayon and the like. The polymeric materials which can be used in making the hoses in the present invention include, for example, NBR, PVC, EPDM, chloropolymers, thermoplastic elastomers, etc.

12. The hose of the present invention having textile filaments so oriented the wales and courses having opposite senses, reduces the propensity for a change in length or diameter or twisting about the hose axis when the hose is exposed to internal pressure, without reducing the flexibility of the hose in bending. These properties can be used to facilitate forming of bends or enlarge sections of the hose, to reduce the amount of reinforcing material required, and to produce a hose with stable dimensions or to make along length hose which coils easily. The hose has particular utility as an automotive molded curved hose or as a garden hose or as an industrial hose, where ease of coiling is a priority.

13. While certain representative embodiments and details have been shown for the purpose of illustrating the invention, it will be apparent to those skilled in this art that various changes and modifications may be made therein without departing from the scope of the claims.

## Claims

1. A hose **(10)** having an axis **(11)** comprising an inner tube layer and at least one layer of knitted reinforcement having wales **(12)** and courses **(14)** characterized in that the reinforcement is knitted such that the wales have a helical orientation opposite to the orientation of the courses.

2. The hose **(10)** according to claim 1 characterized in that the wales **(12)** and courses **(14)** are oriented at angles so as to neutralize the forces acting upon them when the hose is bent or pressurized.

3. The hose **(10)** according to claim 1 or 2 characterized in that the wales **(12)** are oriented at an angle α of 2° to 55° of the axis.

4. The hose **(10)** according to claim 1 or 2 characterized in that the wales **(12)** are oriented at an angle α of 10° to 30° of the axis.

5. The hose **(10)** according to any of claims 1 to 4 characterized in that the wales **(12)** are oriented perpendicular to the courses.
